# EUROPÄISCHE PATENTSCHRIFT

(11) **EP 1 205 698 B1**
(45) Veröffentlichungstag und Bekanntmachung des Hinweises auf die Patenterteilung: **07.12.2005**
(21) Anmeldenummer: 01203473.2
(22) Anmeldetag: 14.09.2001
(51) Int. Cl.: F16K 1/44

(54) **Ventil, insbesondere Heizkörperventil**
Valve, especially radiator valve
Soupape, en particulier soupape de radiateur

(30) Priorität: 09.11.2000 DE 10055614
(43) Veröffentlichungstag der Anmeldung: 15.05.2002
(73) Patentinhaber: Danfoss A/S, 6430 Nordborg (DK)
(72) Erfinder: Messmer, James David, 8000 Aarhus (DK); Iversen, Finn, 8680 Ry (DK); Noer, Tage Regner, 8600 Silkeborg (DK)
(74) Vertreter: Knoblauch, Andreas

(56) Entgegenhaltungen:
- EP-A- 0 444 879
- EP-A- 0 843 118
- GB-A- 1 226 432

## Beschreibung

Die Erfindung betrifft ein Ventil, insbesondere Heizkörperventil, mit einem Gehäuse, das einen Einlaßanschluß und einen Auslaßanschluß aufweist, wobei im Strömungsweg zwischen diesen beiden Anschlüssen eine Absperreinrichtung mit einem Ventilelement und einer Ventilsitzanordnung angeordnet ist, wobei die Ventilsitzanordnung einen ersten Ventilsitz, der dem Einlaßanschluß zugeordnet ist, und einen zweiten Ventilsitz, der dem Auslaßanschluß zugeordnet ist, aufweist und das Ventilelement gleichzeitig mit beiden Ventilsitzen zusammenwirkt.

Ein derartiges Ventil, das zur Steuerung von heißem Wasser in einem Heizsystem in privaten Wohnungen verwendet werden kann, ist aus EP 0 444 879 A1 bekannt. In diesem Ventil ist eine Membrane vorgesehen, die zwei Mündungen in einem Gehäuseunterteil überdeckt, nämlich eine Mündung, die mit einem Einlaß in Verbindung steht und einer Mündung, die mit einem Auslaß in Verbindung steht. Die Membrane wird durch die Kraft einer Druckfeder in Anlage an das untere Gehäuseteil gehalten und verschließt dementsprechend die beiden Kanäle. Die Membran ist zwischen dem Gehäuseunterteil und einem Gehäuseoberteil eingeklemmt und dichtet damit gleichzeitig die Verbindung zwischen dem Gehäuseunterteil und dem Gehäuseoberteil ab. Ein Elektromagnet ist vorgesehen, um die Membrane über einen Stößel gegen die Kraft der Rückstellfeder von den beiden Mündungen abzuheben.

Ein weiteres als Heizkörperventil ausgebildetes Ventil ist aus WO 99/22282 bekannt.

Heizkörperventile haben in der Regel eine vorgegebene Durchflußrichtung, die in manchen Fällen auf der Außenseite des Gehäuses mit einem Pfeil markiert ist. Oft ergibt sie sich auch nur aus einer Einbauanweisung, oder entsprechende Hinweise fehlen völlig. Diese Durchflußrichtung muß bei der Montage beachtet werden, um Störungen zu vermeiden, die sich vor allem durch unangenehme Geräusche bemerkbar machen. Wenn die Ventile "richtig" eingebaut werden, dann trifft das Wasser (oder eine andere Heizflüssigkeit), das durch den Einlaßanschluß einströmt, durch den Ventilsitz hindurch auf das Ventilelement. Wenn nun das Ventilelement auf den Ventilsitz zu bewegt wird, dann findet eine allmähliche Drosselung des durchströmenden Wassers statt. Bei dieser "korrekten" Betriebsweise ergeben sich normalerweise keine Probleme.

Anders sieht es aus, wenn das Ventil falsch angeschlossen wird, d.h. die Speiseleitung eines Heizungssystems mit dem Auslaßanschluß verbunden wird. In diesem Fall strömt das Wasser über das Ventilelement zum Ventilsitz und von dort in den Einlaßanschluß. Wenn das Ventil schließt, wird das Ventilelement auf den Ventilsitz zu bewegt. Wenn der Spalt zwischen dem Ventilelement und dem Ventilsitz eine gewisse Größe unterschreitet, schließt das Ventilelement schlagartig, was einen ebenso plötzlichen Druckanstieg am Auslaßanschluß zur Folge hat. Dieser Druckanstieg äußert sich in einem Wasserschlag. Der Wasserschlag hat nicht nur unangenehme Geräusche zur Folge, sondern kann auch Beschädigungen im Leitungssystem hervorrufen. Dieser Wasserschlag kann aber auch durch einen anderen Impuls ausgelöst werden, beispielsweise durch ein anderes Ventil, das plötzlich schließt oder öffnet, eine Pumpe, die anläuft oder stoppt, oder anderes. Diese Ursachen, die noch nicht alle restlos geklärt sind, sind besonders kritisch dann, wenn das Ventil falsch montiert ist.

In den letzten Jahren hat die Gefahr von Fehlmontagen von Heizkörperventilen zugenommen. Dies wird hauptsächlich auf zwei Ursachen zurückgeführt. Zum einen kann man nicht mehr beim gesamten Montagepersonal die notwendige Qualifikation voraussetzen. Zum anderen kann man gelegentlich in älteren Häusern oder Anlagen nicht mehr genau feststellen, welche Leitung zum Zufluß und welche zum Abfluß des Heizwassers verwendet wird, vor allem dann, wenn man vor einer Demontage versäumt hat, die Durchflußrichtung festzustellen.

Der Erfindung liegt die Aufgabe zugrunde, ein Ventil unabhängig von der Durchströmrichtung betreiben zu können.

Diese Aufgabe wird bei einem Ventil der eingangs genannten Art dadurch gelöst, daß die beiden Ventilsitze in einem Einsatz angeordnet sind und der Einsatz mit einem diagonal verlaufenden Dichtring gegenüber dem Gehäuse abgedichtet ist.

Damit stellt man unabhängig von der Montagerichtung sicher, daß das Ventilelement immer vom durchströmenden Wasser durch eine Öffnung, die von einem Ventilsitz begrenzt ist, angeströmt wird. Wenn das Ventilelement auf den Ventilsitz zu bewegt wird, ergibt sich immer eine allmähliche Drosselung des freien Strömungsquerschnitts. In keinem Fall wird bei einer derartigen Anordnung eine Situation auftreten, bei der das Ventilelement durch zuströmendes Heizungswasser auf den Ventilsitz herabgedrückt wird. Das Wasser strömt also immer gegen die Seite des Ventilelements, die mit der Ventilsitzanordnung zusammenwirkt, und zwar unabhängig davon, durch welchen Anschluß das Wasser einströmt. Hierbei ist es nicht erforderlich, daß das Ventilelement an beiden Ventilsitze exakt gleichzeitig zur Anlage kommt, obwohl eine zeitliche Übereinstimmung angestrebt werden sollte. Es reicht aus, wenn beide Ventilsitze durch das Ventilelement beaufschlagt werden, bevor sich in der Umgebung des Ventilelements ein Druck aufbauen kann, der das Ventilelement schlagartig auf den noch freien Ventilsitz drückt. Auch in einem derartigen Fall ist aber die Gefahr eines Wasserschlages außerordentlich gering, weil das zufließende Wasser durch die Drosselung am bereits geschlossenen Ventilsitz in ausreichendem Maße abgebremst worden ist. Der Ausdruck "geschlossener Ventilsitz" wird als Abkürzung für den Zustand verwendet, in dem das Ventilelement am Ventilsitz anliegt. Da die beiden Ventilsitze in einem Einsatz angeordnet sind, ergibt sich eine sehr einfache und kostengünstige Konstruktion, weil eine Bearbeitung des Gehäuses nur in einem relativ geringen Umfang erforderlich ist. Man muß das Gehäuse dahingehend bearbeiten, daß der Einsatz dichtend eingesetzt werden kann. Im übrigen kann das Gehäuse "leer" bleiben, weil sämtliche Führungsflächen und -wände für das Wasser im Einsatz ausgebildet werden können. Da der Einsatz mit einem diagonal verlaufenden Dichtring gegenüber dem Gehäuse abgedichtet ist, benötigt man nur einen Dichtring, um den Einsatz im Gehäuse abzudichten. Gleichzeitig ist aber die notwendige Trennung zwischen Einlaß und Auslaß gegeben, wenn das Ventil geschlossen ist.

Hierbei ist bevorzugt, daß beide Ventilsitze in der gleichen Begrenzungswand einer Ventilkammer angeordnet sind, in der das Ventilelement senkrecht zu der Begrenzungswand bewegbar ist. Dies ist eine relativ einfache Ausbildung. Durch eine Bewegung des Ventilelements senkrecht zu der Begrenzungswand können beide Ventilsitze gleichzeitig beaufschlagt werden, d.h. die Öffnungen, die von den Ventilsitzen gebildet werden, können gleichzeitig geschlossen werden. Eine komplizierte Bewegungssteuerung des Ventilelements dahingehend, daß beide Ventilsitze gleichzeitig beaufschlagt werden, ist nicht erforderlich.

Vorzugsweise ist der Einsatz aus einem Kunststoff gebildet. Das Gehäuse besteht normalerweise aus Metall. Die Verwendung eines Kunststoffs hat den Vorteil, daß der Kunststoff in der Regel etwas nachgiebiger ist als der Werkstoff des Gehäuses, so daß die Dichtigkeit leichter herzustellen ist, beispielsweise dadurch, daß der Kunststoffeinsatz in das Gehäuse eingepreßt wird. Kunststoff läßt sich darüber hinaus leicht bearbeiten und mit der notwendigen Genauigkeit formen.

Hierbei ist besonders bevorzugt, daß der Einsatz als Spritzgußteil ausgebildet ist. Spritzgießen ist ein relativ einfaches Verfahren, um Kunststoffteile zu formen.

Vorzugsweise umschließen die beiden Ventilsitze Öffnunggen, die gemeinsam an eine Kreisfläche angepaßt sind. Damit ist es möglich, ein Ventilelement zu verwenden, das ebenfalls eine Kreisflächenform aufweist. Man nutzt nun diese Kreisflächenform für möglichst große Öffnungen aus, damit das Ventil genügend Durchflußkapazität hat. Die gute Ausnutzung muß nicht bedeuten, daß die gesamte Fläche unter dem Ventilelement vollständig von den Öffnungen, die von den Ventilsitzen definiert werden, ausgenutzt wird. Es reicht aus, wenn die Öffnungen groß genug sind, um die gewünschte Ventilkapazität bereitzustellen.

Hierbei ist besonders bevorzugt, daß die beiden Ventilsitze konzentrisch zueinander angeordnet sind. Damit läßt sich die Fläche unterhalb des Ventilelements am besten ausnutzen.

Bevorzugterweise ist eine Trennwand, die den inneren Ventilsitz bildet, an ihrer dem Ventilelement zugewandten Stirnseite abgerundet. Dies führt dazu, daß das Ventil ein verhältnismäßig niedriges Geräuschniveau hat. Normalerweise liegt die Rundung im Bereich von 0,75 bis 1 mm, und dieses Maß kann dann auch die Dicke der Trennwand definierten. Das Verhältnis der Fläche, die von der Trennwand umschlossen ist, zu der Fläche eines Ringkanals, der außen um die Trennwand herumgeführt ist, richtet sich nach den Kapazitätsanforderungen an das Ventil. Vorzugsweise sollten beide Flächen zumindest annähernd gleich sein.

Vorzugsweise weist das Ventilelement in einem Bereich, der mit dem äußeren Ventilsitz zusammenwirkt, eine Dichtlippe auf. Damit wird die Kraft, die zum vollständigen Schließen des Ventils erforderlich ist, klein gehalten. Man kann erreichen, daß die Ventilkammer abgedichtet wird, bevor der Spalt zwischen Ventilelement und Trennwand vollständig geschlossen ist. Dies ergibt eine hohe Zuverlässigkeit bei der Vermeidung eines Wasserschlags, da unabhängig von der Durchflußrichtung immer eine allmähliche Drosselung der durchströmenden Wassermenge erfolgt.

Die Erfindung wird im folgenden anhand von bevorzugten Ausführungsbeispielen in Verbindung mit der Zeichnung näher beschrieben. Hierin zeigen:
- Fig. 1: eine schematische Darstellung des Prinzips des Ventils nach dem bekannten Stand der Technik
- Fig. 2: eine Ausführungsform der Erfindung mit einem Einsatz,
- Fig. 3: eine Darstellung entsprechend Fig. 2 mit geradem Durchgang,
- Fig. 4: einen Schnitt IV-IV nach Fig. 3.

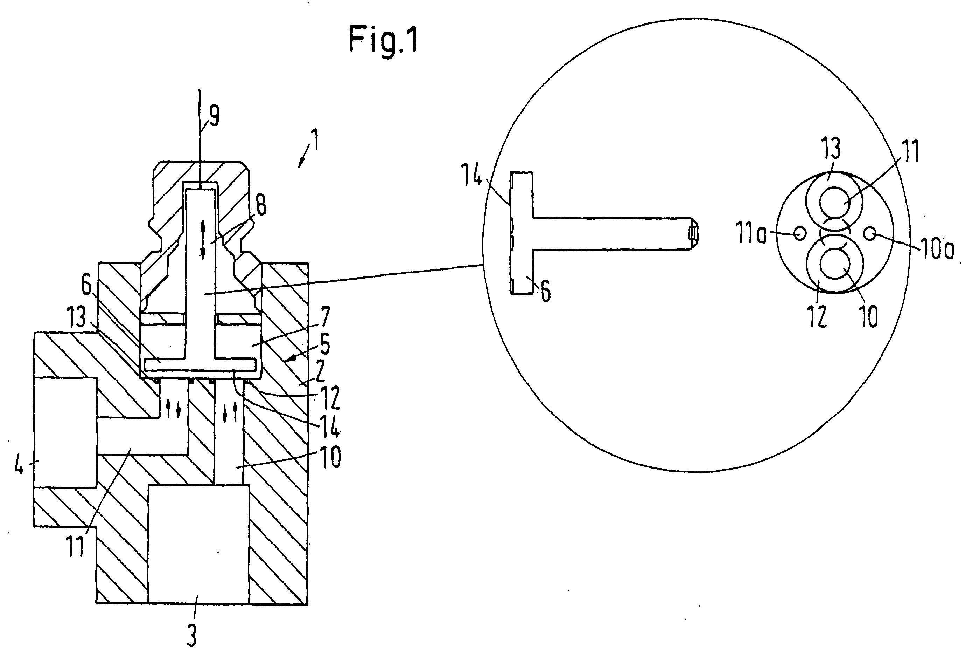

Fig. 1 zeigt schematisch ein Heizkörperventil 1 mit einem Gehäuse 2, das einen Einlaßanschluß 3 und einen Auslaßanschluß 4 aufweist. Die Bezeichnung Einlaßanschluß und Auslaßanschluß wird hier lediglich zu dem Zweck gewählt, beide Anschlüsse voneinander unterscheiden zu können. Aufgrund der im folgenden geschilderten Konstruktion ist es nicht erforderlich, daß Wasser oder eine andere Heizflüssigkeit tatsächlich am Einlaßanschluß einströmt und am Auslaßanschluß ausströmt. Die Strömung kann auch in umgekehrter Richtung erfolgen.

Zwischen dem Einlaßanschluß und dem Auslaßanschluß 4 ist eine Absperreinrichtung 5 angeordnet, die ein Ventilelement 6 aufweist, das in einer Ventilkammer 7 bewegbar ist, und zwar in Richtung eines Doppelpfeils 8. Die Bewegung des Ventilelements 6 wird dabei von einer nur schematisch dargestellten Betätigungseinrichtung 9, beispielsweise einen von einem Thermostatventilaufsatz gesteuerten Stößel, gesteuert. Aus Gründen der Übersicht sind Einzelheiten, wie Rückstellfedern oder ähnliches, nicht dargestellt.

Der Einlaßanschluß 3 ist über einen Kanal 10 und der Auslaßanschluß 4 ist über einen Kanal 11 mit der Ventilkammer 7 verbunden. Die jeweiligen Mündungen der Kanäle 10, 11 in die Ventilkammer 7 sind von Ventilsitzen 12, 13, umgeben, die hier nur schematisch dargestellt sind. Sie können jegliche bekannte Form aufweisen, beispielsweise ringförmige Wülste oder einfach Dichtflächen, die mit einer Stirnseite 14 des Ventilelements 6 dichtend zusammenwirken können.

Das Ventilelement 6 ist so groß, daß es beide Ventilsitze 12, 13 überdeckt. Dies hat mehrere Effekte zur Folge: Zum einen wird das Ventilelement 6 immer an seiner Stirnseite 14 angeströmt. Jegliche Schließbewegung des Ventilelements 6 erfolgt also gegen den Druck des zuströmenden Wassers. Zum anderen ergibt sich beim Schließen immer eine zunehmende Drosselung zwischen dem Ventilelement 6 und beiden Ventilsitzen 12, 13, so daß das durchströmende Wasser zuverlässig gedrosselt wird. Wenn dann das Ventilelement 6 an den beiden Ventilsitzen 12, 13 anliegt, dann ist das durchströmende Wasser allmählich abgebremst worden und zum Stillstand gekommen, so daß kein Druckstoß vorkommt, der schlagartig abgebaut werden muß.

Fig. 1 zeigt auch einen vergrößerten Ausschnitt des Ventilelements und der Begrenzungswand der Ventilkammer 7, in der die Kanäle 10, 11 münden. Zusätzlich zu den Kanälen 10, 11 können weitere Kanäle (nicht dargestellt) vorgesehen sein, die mit dem Einlaßanschluß 3 bzw. mit dem Auslaßanschluß 4 in Verbindung stehen, so daß der Strömungsquerschnitt, der für die durchfließende Flüssigkeit zur Verfügung steht, vergrößert wird. Auch die anderen Kanäle sind an ihren Mündungen von Ventilsitzen umgeben, die nicht näher dargestellt sind und auch einfach durch die die Mündungen umgebenden Flachen gebildet sein können. Für das Ventilelement 6 können noch Führungsstifte 10a, 11a vorgesehen sein.

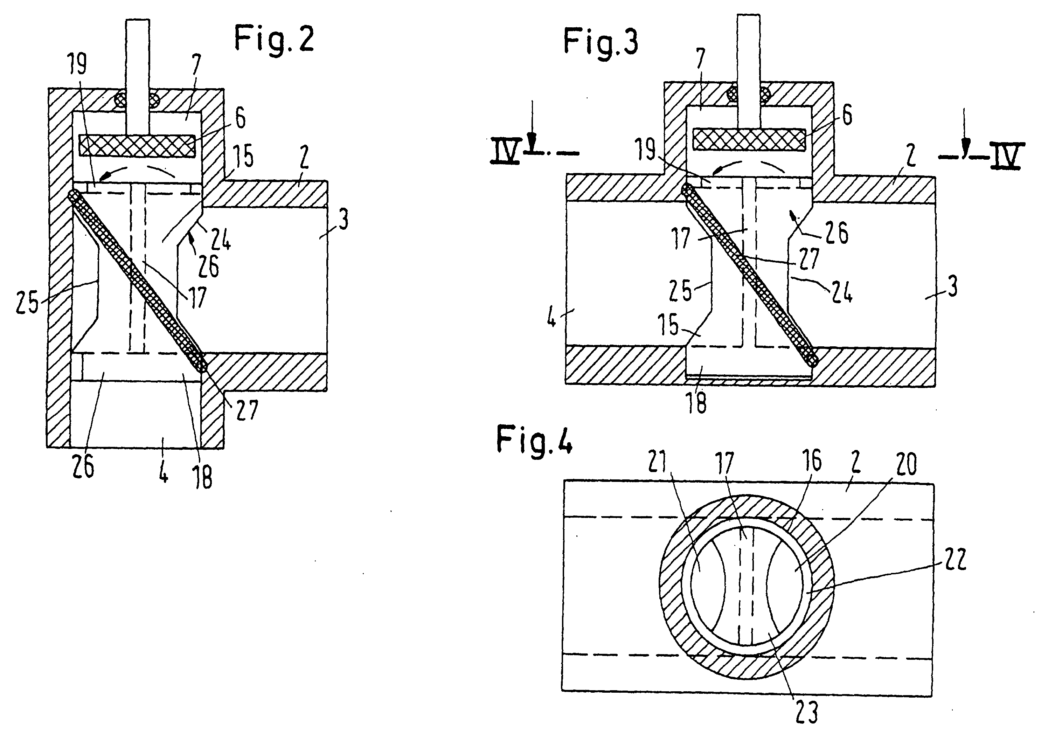

Die Fig. 2 bis 4 zeigen abgewandelte Ausführungsformen, wobei das Ventil nach Fig. 2 für eine abgewinkelte Anordnung vorgesehen ist, während das Ventil nach Fig. 3 für eine gerade durchgehende Montage vorgesehen ist. Die Erläuterung erfolgt daher hauptsächlich anhand der Fig. 3, wobei gleiche Teile mit gleichen Bezugszeichen versehen sind.

Im Gehäuse 2 ist ein Einsatz 15 angeordnet, der als Spritzgußteil aus Kunststoff gebildet ist. Der Einsatz ist in einer Bohrung 16 angeordnet, die im vorliegenden Fall senkrecht zum Einlaßanschluß 3 verläuft. Andere Winkel sind möglich. Das Gehäuse 2 ist hier lediglich schematisch dargestellt. Natürlich weist das Gehäuse 2 mindestens eine Öffnung auf, durch die der Einsatz 15 in das Gehäuse 2 eingesetzt werden kann. Diese Öffnung kann durch einen Deckel verschlossen werden. Der Einsatz 15 kann auch am Deckel befestigt sein.

Der Einsatz 15 weist eine Trennwand 17 auf, die sich im Querschnitt über die gesamte Fläche des Einlaßanschlusses 3 erstreckt. An seinem Boden weist der Einsatz 15 einen Fuß 18 auf, der bei der Ausgestaltung nach Fig. 2 auf der Seite des Einlaßanschlusses 3 geschlossen ist, während er bei der Ausgestaltung nach Fig. 3 durchgehend geschlossen ist. Der Einsatz 15 weist ferner einen Kopf 19 auf. Im Kopf 19 sind eine erste Öffnung 20 und eine zweite Öffnung 21 angeordnet, die von einer Ringfläche 22 gemeinsam umschlossen werden, wobei die Ringfläche 22 mit dem Ventilelement 6 zusammenwirkt. Ferner ist ein auf die Trennwand 17 aufgesetzter Steg 23 vorgesehen, der ebenfalls mit dem Ventilelement 6 zusammenwirkt. Der Steg 23 und die Ringfläche 22 bilden zwei Ventilsitze, die die Öffnungen 20, 21 umgeben.

Der Einsatz 15 weist auf seiner dem Einlaßanschluß 3 zugewandten Seite eine Öffnung 24 und auf der gegenüberliegenden Seite eine Öffnung 25 auf. Wie durch gestrichelte Pfeile 26 dargestellt, ist es dann, wenn das Ventilelement 6 vom Kopf 19 abgehoben ist, möglich, daß die Heizflüssigkeit durch die Öffnung 24 in den Einsatz 15, durch die Öffnung 20 in die Ventilkammer 7, durch die Öffnung 21 wieder in den Einsatz 15 eintritt und den Einsatz dann entweder durch die Öffnung 25 oder durch eine Öffnung 26 im Fuß 18 in dem Auslaßanschluß 4 übertritt. Falls das Ventil "falsch" montiert ist, ist der Strömungsweg umgekehrt. In beiden Fällen ist sichergestellt, daß das Ventilelement 6 von der "richtigen" Seite her angeströmt wird.

Wenn das Ventil geschlossen wird, wird das Ventilelement 6 auf den Einsatz 15 abgesenkt, wodurch sich der Spalt zwischen dem Ventilelement 6 einerseits und dem Steg 23 bzw. der Ringfläche 22 andererseits allmählich verringert. Da in der Ventilkammer 7 kein zusätzlicher Druck aufgebaut wird, kann das Ventilelement 6 gesteuert bis zur Anlage an den Einsatz 15 bewegt werden.

Der Einsatz 15 ist durch einen diagonal angeordneten Dichtring 27 gegenüber dem Gehäuse 2 abgedichtet. Dieser Dichtring 27 bewirkt eine zuverlässige Dichtung zwischen Einlaßanschluß 3 und Auslaßanschluß 4. Ein Flüssigkeitsstrom ist nur bei geöffnetem Ventilelement 6 möglich. Anstelle eines einzigen diagonal angeordneten Dichtrings können auch zwei Dichtringe verwendet werden.

In der Ausführungsform nach den Fig. 2 bis 4 sind die einzelnen Öffnungen 20, 21, die von den als Ventilsitz dienenden Flächen 22, 23 umgrenzt.

## Patentansprüche

1. Ventil, insbesondere Heizkörperventil (1), mit einem Gehäuse (2), das einen Einlaßanschluß (3) und einen Auslaßanschluß (4) aufweist, wobei im Strömungsweg zwischen diesen beiden Anschlüssen (3, 4) eine Absperreinrichtung mit einem Ventilelement (6) und einer Ventilsitzanordnung (12, 13; 22, 23) angeordnet ist, wobei die Ventilsitzanordnung (12, 13; 22, 23) einen ersten Ventilsitz (12; 22, 23), der dem Einlaßanschluß (3) zugeordnet ist, und einen zweiten Ventilsitz (13; 22, 23), der dem Auslaßanschluß (4) zugeordnet ist, aufweist und das Ventilelement (6) gleichzeitig mit beiden Ventilsitzen (12; 13; 22, 23) zusammenwirkt, **dadurch gekennzeichnet, daß** die beiden Ventilsitze (22, 23) in einem Einsatz (15) angeordnet sind und der Einsatz (15) mit einem diagonal verlaufenden Dichtring (27) gegenüber dem Gehäuse (2) abgedichtet ist.

2. Ventil nach Anspruch 1, **dadurch gekennzeichnet, daß** beide Ventilsitze (12; 13; 22, 23; 29, 30) in der gleichen Begrenzungswand einer Ventilkammer (7) angeordnet sind, in der das Ventilelement (6) senkrecht zu der Begrenzungswand bewegbar ist.

3. Ventil nach Anspruch 1 oder 2, **dadurch gekennzeichnet, daß** der Einsatz (15) aus einem Kunststoff gebildet ist.

4. Ventil nach Anspruch 3, **dadurch gekennzeichnet, daß** der Einsatz (15) als Spritzgußteil ausgebildet ist.

5. Ventil nach einem der Ansprüche 1 bis 4, **dadurch gekennzeichnet, daß** die beiden Ventilsitze (22, 23; 29, 30) Öffnungen (10, 11) umschließen, die gemeinsam an eine Kreisfläche angepaßt sind.

6. Ventil nach Anspruch 5, **dadurch gekennzeichnet, daß** die beiden Ventilsitze (29, 30) konzentrisch zueinander angeordnet sind.

7. Ventil nach Anspruch 6, **dadurch gekennzeichnet, daß** eine Trennwand (28), die den inneren Ventilsitz bildet, an ihrer dem Ventilelement (6) zugewandten Stirnseite (29) abgerundet ist.

8. Ventil nach Anspruch 6 oder 7, **dadurch gekennzeichnet, daß** das Ventilelement (6) in einem Bereich, der mit dem äußeren Ventilsitz (30) zusammenwirkt, eine Dichtlippe (31) aufweist.

## Claims

1. Valve, particularly radiator valve (1), with a housing (2) having an inlet connection (3) and an outlet connection (4), a closing device with a valve element (6) and a valve seat arrangement (12, 13; 22, 23) being located in the flow path between these two connections (3, 4), the valve seat arrangement (12, 13; 22, 23) having a first valve seat (12; 22, 23) allocated to the inlet connection (3), and a second valve seat (13; 22, 23) allocated to the outlet connection (4), the valve element (6) interacting with both valve seats (12, 13; 22, 23) at the same time, **characterised in that** the two valve seats (22, 23) are located in an insert (15), said insert (15) being sealed in relation to the housing (2) by means of a diagonally extending sealing ring (27).

2. Valve according to claim 1, **characterised in that** both valve seats (12; 13; 22, 23; 29, 30) are located in the bordering wall of a valve chamber (7), in which the valve element (6) is movable perpendicularly to the bordering wall.

3. Valve according to claim 1 or 2, **characterised in that** the insert (15) is made of a plastic material.

4. Valve according to claim 3, **characterised in that** the insert (15) is made as an injection moulded part.

5. Valve according to one of the claims 1 to 4, **characterised in that** the two valve seats (22, 23; 29, 30) surround openings (10, 11), which in common are adapted to a circular surface.

6. Valve according to claim 5, **characterised in that** the two valve seats (29, 30) are arranged to be concentrical to each other.

7. Valve according to claim 6, **characterised in that** a separating wall (28) forming the inner valve seat is rounded on its front side (29) facing the valve element (6).

8. Valve according to claim 6 or 7, **characterised in that** in an area interacting with the outer valve seat (30) the valve element (6) has a lip seal (31).

## Revendications

1. Soupape, en particulier soupape de radiateur (1), avec un logement (2) qui présente un raccord d'admission (3) et un raccord de sortie (4), de sorte que dans le circuit d'écoulement entre ces deux raccords (3, 4) est agencé un dispositif de blocage avec un élément de soupape (6) et un agencement de sièges de soupape (12, 13 ; 22, 23), dans lequel l'agencement de sièges de soupape (12, 13 ; 22, 23) comporte un premier siège de soupape (12 ; 22, 23) qui est affecté au raccord d'admission (3) et un deuxième siège de soupape (13 ; 22, 23) qui est affecté au raccord de sortie (4), et l'élément de soupape (6) agit simultanément avec les deux sièges de soupape (12, 13 ; 22, 23), **caractérisée en ce que** les deux sièges de soupape (22, 23) sont disposés dans une unité (15) et l'unité (15) est rendue étanche par un joint d'étanchéité s'étendant diagonalement (27) par rapport au logement (2).

2. Soupape selon la revendication 1, **caractérisée en ce que** les deux sièges de soupape (12, 13 ; 22, 23 ; 29, 30) sont disposés dans la même paroi de séparation d'une chambre de soupape (7), dans laquelle l'élément de soupape (6) est mobile verticalement par rapport à la paroi de séparation.

3. Soupape selon la revendication 1 ou 2, **caractérisée en ce que** l'unité (15) est formée en matière synthétique.

4. Soupape selon la revendication 3, **caractérisée en ce que** l'unité (15) est conçue en tant que pièce coulée par injection.

5. Soupape selon l'une des revendications 1 à 4, **caractérisée en ce que** les deux sièges de soupape (22, 23 ; 29, 30) comportent des ouvertures (10, 11) qui sont adaptées conjointement à une surface circulaire.

6. Soupape selon la revendication 5, **caractérisée en ce que** les deux sièges de soupape (29, 30) sont disposés concentriquement l'un par rapport à l'autre.

7. Soupape selon la revendication 6, **caractérisée en ce qu'**une paroi de séparation (28) qui forme le siège de soupape interne est arrondie sur son côté frontal (29) dirigé vers l'élément de soupape (6).

8. Soupape selon la revendication 6 ou 7, **caractérisée en ce que** l'élément de soupape (6) qui coopère dans une zone avec le siège de soupape extérieur (30) présente une lèvre d'étanchéité (31).
